# EUROPEAN PATENT SPECIFICATION

(11) **EP 3 650 508 B1**
(45) Date of publication and mention of the grant of the patent: **27.11.2024**
(21) Application number: 18828826.0
(22) Date of filing: 26.04.2018
(51) Int. Cl.: C09D 7/45

(54) **HEAT-RAY SHIELDING PARTICLE DISPERSION AND METHOD FOR PRODUCING SAME**
WÄRMESTRAHLENABSCHIRMENDE PARTIKELDISPERSION UND HERSTELLUNGSVERFAHREN DAFÜR
DISPERSION DE PARTICULES DE PROTECTION CONTRE LES RAYONS THERMIQUES ET PROCÉDÉ POUR SA PRODUCTION

(30) Priority: 04.07.2017 JP 2017130830
(43) Date of publication of application: 13.05.2020
(73) Proprietor: Mitsubishi Materials Electronic Chemicals Co., Ltd., Akita-shi Akita 010-8585 (JP)
(72) Inventor: TAKAYA, Ai, Akita-shi Akita 010-8585 (JP); NAKAGAWA, Takeshi, Akita-shi Akita 010-8585 (JP); TAZAKI, Kazuki, Akita-shi Akita 010-8585 (JP)
(74) Representative: Gille Hrabal Partnerschaftsgesellschaft mbB Patentanwälte
(86) International application number: PCT/JP2018/016934
(87) International publication number: WO 2019/008883

(56) References cited:
- DE-A1- 10 261 541
- JP-A- 2003 327 917
- JP-A- 2007 056 264
- JP-A- 2007 320 780
- JP-A- 2009 072 985
- JP-A- 2011 219 611
- JP-A- 2012 091 953
- JP-A- 2017 025 117
- JP-A- 2017 117 632
- SONG JA EUN ET AL: "Preparation of Water Dispersed Indium Tin Oxide Sol Solution", MOLECULAR CRYSTALS AND LIQUID CRYSTALS, vol. 444, no. 1, 20 August 2006 (2006-08-20), UK, pages 247 - 255, XP055777702, ISSN: 1542-1406, Retrieved from the Internet <URL:https://www.tandfonline.com/doi/pdf/10.1080/15421400500365078?needAccess=true> DOI: 10.1080/15421400500365078

## Description

### TECHNICAL FIELD

The present invention relates to a heat-ray shielding particle dispersion used for a coating material for heat-ray shielding to be coated onto a transparent portion of automobiles, building materials, etc., and a method for producing the same. More specifically, it relates to a heat-ray shielding particle dispersion in which ITO particles are dispersed in water and a method for producing the same. In the present specification, heat-ray refers to an infrared ray, and ITO refers to indium tin oxide.

### BACKGROUND ART

Heretofore, as a heat-ray shielding particle dispersion to be used for a coating material for heat-ray shielding, a solvent-based dispersion has been disclosed (for example, see Patent Document 1.). In Patent Document 1, there is disclosed that this solvent-based dispersion is prepared by charging ITO powder having a BET specific surface area of 40 m²/g or more and a color tone of dark blue in a mixed solution of distilled water, triethylene glycol-2-ethylhexanoate, anhydrous ethanol, phosphated polyester, 2-ethylhexanoic acid and 2,4-pentanedione to be dispersed. According to this dispersion, when a dispersion having ITO particle concentration of 0.7 to 1.2% by mass is placed in a glass cell having an optical path length of 1 mm and measured, a solar transmittance is to be 60% or less, a visible light transmittance 85% or more, and a haze 0.5% or less.

In addition, there is disclosed a coating liquid for a transparent conductive film which comprises, in a solvent, (a) 0.1 to 50% by weight of ITO fine particles having an average particle diameter of 3 to 60 nm, and 0.5 to 10% by weight of an organic ligand is coordinated based on the total weight of the fine particles, and (b) 0.001 to 5% by weight of a conductive polymer which is a polymer compound containing any of oxygen, nitrogen and sulfur in the structural unit, and having a weight average molecular weight of 10,000 to 200,000 and having a sheet resistance when the polymer compound is made a film of 1×10⁷ Ω/□ or less (for example, see Patent Document 2.). In Examples 9 to 10 of Patent Document 2, there are disclosed that water is added to ITO fine particles having an average particle diameter of 9.6 nm and having citric acid as a ligand, then, a polythiophene-based polymer/isopropanol dispersion having a weight average molecular weight of 100,000 is added and mixed to prepare a coating liquid for a transparent conductive film (Example 9: 1.5% by weight of Component (a) and 0.05% by weight of Component (b), Example 10: 1.5% by weight of Component (a) and 0.15% by weight of Component (b)), and also disclosed that the prepared coating liquid for a transparent conductive film is coated onto a polycarbonate film substrate and a transparent conductive film is formed, these transparent conductive films have high adhesiveness of the coated film to the substrate, a light transmittance of 88.5% (Example 9) and 86.0% (Example 10), a haze of 3.5% (Example 9) and 4.9% (Example 10), and a sheet resistance of 750 Ω/□ (Example 9) and 670 Ω/□ (Example 10), so that they have sufficiently high optical characteristics and conductive characteristics as transparent conductive films.

Further, there is disclosed organic solvent dispersible particles coated by a dispersant comprising a molecule having at least two or more polar functional groups, one or two polar functional groups is/are free form and the other at least one or more polar functional groups is/are protected by a protective group(s) (for example, see Patent Document 3.). The organic solvent dispersible particles of this Patent Document 3 are capable of stably dispersing in water, and in Examples 1 to 4 of Patent Document 3, there are described that a magnetic nanoparticle aqueous solution having water dispersibility can be obtained by adding a DMSO solution to iron oxide suspended in chloroform and stirring to obtain chloroform dispersible magnetic nanoparticles (organic solvent dispersible particles), and then, adding a hydrogen chloride solution (Example 1), a sodium hydroxide solution (Example 2), a methylamine-methanol solution (Example 3) or hydrazine monohydrate (Example 4) followed by vigorously stirring to move the magnetic nanoparticles to an aqueous phase.

Moreover, there is disclosed a metal oxide particle dispersion comprising (A) metal oxide particles having a number average particle size of the primary particles of 0.01 to 10 µm such as chromium dioxide, iron(III) oxide, triiron tetraoxide and dichromium trioxide, (B) an aqueous liquid and (C) an aggregation preventive agent which is a phosphorus atom-containing compound (for example, see Patent Document 4.). In this Patent Document 4, as the (C) aggregation preventive agent, phosphoric acid, pyrophosphoric acid, metaphosphoric acid, a phosphoric acid ester, phosphonic acid, diphosphonic acid, triphosphonic acid, tetraphosphonic acid, pentaphosphonic acid, monophosphonic acid, a phosphonic acid ester, phosphinic acid, diphosphinic acid, monophosphinic acid or a salt thereof are shown, and the content weight ratio (A:C) of the (A) metal oxide particles and the (C) aggregation preventive agent is shown to be 100:0.01 to 50. According to the metal oxide particle dispersion, it is said to be excellent in dispersion stability (aggregation preventive property). Prior art documents JP-A-2012 091953 and JP-A-2017 025117 each disclose heat shielding particle dispersions. The type of dispersants disclosed in said prior art document deviate from the one of the current invention; i.e. phosphate ester-based dispersants, polyglycerin-based dispersants, polyvinylpyrrolidone-based dispersants and a polyacrylate-based dispersants are not disclosed in these prior art documents.

### PRIOR ART DOCUMENT

### PATENT DOCUMENT

Patent Document 1: JP2011-116623A (Claim 1, Claim 2, paragraph [0045] to paragraph [0053])
Patent Document 2: JP2015-003942A (Claim 1, paragraph [0151] to paragraph [0154])
Patent Document 3: JP 2008-127241A (Claim 1, paragraph [0021], paragraph [0043] to paragraph [0051])
Patent Document 4: JP 2011-219611A (Claim 1, Claim 3, Claim 5, Claim 6, paragraph [0001], paragraph [0002], paragraph [0009])

### SUMMARY OF THE INVENTION

### PROBLEMS TO BE SOLVED BY THE INVENTION

Whereas the dispersion shown in Patent Document 1 has a solar transmittance of 60% or less, a visible light transmittance of 85% or more, a haze of 0.5% or less, and has high transparency, it is a solvent-based dispersion, so that there is a problem that it is necessary to consider the environment and a human body in the manufacturing process, the use process and the waste liquid treatment process of the dispersion. The coating liquid for a transparent conductive film shown in Patent Document 2 is an aqueous dispersion so that the problem of Patent Document 1 is solved, but the dispersion is not a dispersion of simply mixing the ITO fine particles and water, but it is necessary to coordinate the whole ITO fine particles with organic ligands and there is a troublesomeness in mixing with the conductive polymer.

The magnetic nanoparticle aqueous solution shown in Patent Document 3 is an aqueous dispersion so that the problem of Patent Document 1 is solved, but a troublesome step for eliminating the protective group of the dispersant of the nanoparticles is required. The metal oxide particle dispersion shown in Patent Document 4 is an aqueous dispersion so that the problem of Patent Document 1 is solved, but it is applied for the uses such as a design printing and a magnetic ink for an aqueous paint or an aqueous ink using magnetic particles such as chromium oxide and iron oxide as the metal oxide particles whereby it is not suitable for the use of shielding heat-ray.

An object of the present invention is to provide a heat-ray shielding particle dispersion excellent in heat-ray cut effect, and having high visible light transmittance and transparency. Another object of the present invention is to provide a method for producing a heat-ray shielding particle dispersion in a simple and easy way.

### MEANS TO SOLVE THE PROBLEMS

A first aspect of the present invention is directed to a heat-ray shielding particle dispersion which contains indium tin oxide (ITO) particles having a heat-ray shielding capability, a solvent containing 60% by mass or more of water and a dispersant, the ITO particles have a BET specific surface area of 20 m²/g or more and 75 m²/g or less, have a blue or dark blue tone represented by an L value of 50 or less, a<0 and b<0 in an Lab color system, and are contained in an amount of 1-90% by mass with respect to 100% by mass of the dispersion, the solvent is a component obtained by removing the heating residue of the dispersion from the heat-ray shielding particle dispersion, and is contained in an amount of 6.1-99.0% by mass with respect to 100% by mass of the dispersion, the dispersant is one kind or two or more kinds of dispersants selected from the group consisting of a phosphate ester-based dispersant, a polyglycerin-based dispersant, a polyvinylpyrrolidone-based dispersant, and a polyacrylate-based dispersant, wherein the dispersant is a water-soluble dispersant and the content of the active ingredient of the dispersant is 0.05-80 parts by mass with respect to 100 parts by mass of the ITO particles.

A second aspect of the present invention is the heat-ray shielding particle dispersion, which is the invention according to the first aspect of the invention, wherein, when a heat-ray shielding particle dispersion having the ITO particle concentration of 0.3% by mass is placed in a glass cell having an optical path length of 1 mm and measured, a haze is 5% or less, a transmittance at a wavelength of 1,200 nm is 60% or less and a visible light transmittance is 85% or more.

A third aspect of the present invention is a method for producing a heat-ray shielding particle dispersion by mixing ITO particles having a heat-ray shielding capability, a solvent containing 60% by mass or more of water and a dispersant, wherein the ITO particles have a BET specific surface area of 20 m²/g or more and 75 m²/g or less, have a blue or dark blue tone represented by an L value of 50 or less, a<0 and b<0 in an Lab color system, the solvent is a component obtained by removing the heating residue of the dispersion from the heat-ray shielding particle dispersion, the dispersant is one kind or two or more kinds of dispersants selected from the group consisting of a phosphate ester-based dispersant, a polyglycerin-based dispersant, a polyvinylpyrrolidone-based dispersant, and a polyacrylate-based dispersant, wherein the dispersant is a water-soluble dispersant and these are mixed so as to contain 1 to 90% by mass of the ITO particles and 6.1 to 99.0% by mass of the solvent with respect to 100% by mass of the dispersion, respectively, and 0.05 to 80 parts by mass of an active ingredient(s) of the dispersant with respect to 100 parts by mass of the ITO particles.

A fourth aspect of the present invention is a method for producing a coating material for heat-ray shielding using the heat-ray shielding particle dispersion according to the first or second aspect or the heat-ray shielding particle dispersion produced according to the method of the third aspect.

### EFFECTS OF THE INVENTION

Since the heat-ray shielding particle dispersion of the first aspect of the present invention is an aqueous dispersion, so that, as compared with the solvent-based dispersion shown in Patent Document 1, it is less influenced to the environment or a human body in the manufacturing process, the use process and the waste liquid treatment process of the dispersion. In addition, the aqueous dispersion shown in the Patent Document 2 contains a conductive polymer, so that it has transparency and conductivity but is inferior in heat-ray shielding property. Further, in the aqueous dispersions shown in Patent Documents 3 and 4, the particles to be dispersed are magnetic particles which have dispersibility of particles or aggregation preventive property, but are inferior in heat-ray shielding property. To the contrary, the heat-ray shielding particle dispersion of the first aspect comprises by mixing ITO fine particles having a BET specific surface area of 20 m²/g or more and 75 m²/g or less, and having a blue or dark blue tone represented by an L value of 50 or less, a<0 and b<0 in an Lab color system, a predetermined amount of solvent containing 60% by mass or more of water, and a predetermined dispersant which is contained with a predetermined amount with respect to the ITO particles, in spite of an aqueous dispersion, it is excellent in a heat-ray cut effect which is similar to the solvent-based dispersion, and has high visible light transmittance and transparency.

In the heat-ray shielding particle dispersion of the second aspect of the present invention, when the heat-ray shielding particle dispersion having an ITO particle concentration of 0.3% by mass is placed in a glass cell having an optical path length of 1 mm and measured, a haze is 5% or less, a transmittance at a wavelength of 1,200 nm is 60% or less and a visible light transmittance is 85% or more, so that it is excellent in the heat-ray cut effect, and has high visible light transmittance and transparency.

In the producing method of the third aspect of the present invention, without requiring a step of coordinating organic ligands to whole ITO fine particles as in Patent Document 2, or without requiring a step of eliminating the protective group of the dispersant of the nanoparticles as in Patent Document 3, a heat-ray shielding particle dispersion can be produced in a simple and easy way that is to mix predetermined ITO fine particles having an BET specific surface area of 20 m²/g or more and 75 m²/g or less, a solvent containing 60% by mass or more of water, and a predetermined dispersant with predetermined contents to the dispersion or the ITO particles.

According to the producing method of the coating material for heat-ray shielding of the fourth aspect of the present invention, a coating material for heat-ray shielding can be obtained by using the heat-ray shielding particle dispersion of the first or the second aspect or the heat-ray shielding particle dispersion produced by the method of the third aspect, and when a film is formed by the coating material, a coating film excellent in the heat-ray cut effect, and having high visible light transmittance and transparency can be formed.

### EMBODIMENTS TO CARRY OUT THE INVENTION

Next, an embodiment to carry out the present invention will be explained.

### [Heat-ray shielding particle dispersion]

The heat-ray shielding particle dispersion of the present embodiment contains ITO particles having a heat-ray shielding capability, a solvent containing 60% by mass or more of water and a dispersant. The ITO particles have a BET specific surface area of 20 m²/g or more and 75 m²/g or less, preferably 40 to 75 m²/g, and have a blue or dark blue tone with an L value of 50 or less, preferably an L value of 30 or less, a<0 and b<0 in an Lab color system. If the BET method specific surface area is less than 20 m²/g, when the heat-ray shielding particle dispersion having the ITO particle concentration of 0.3% by mass is placed in a glass cell having an optical path length of 1 mm and measured (hereinafter referred to as measurement of an optical path length of 1 mm.), the haze becomes high and transparency of the film becomes low. When the content of the ITO particles in the film is reduced to lower the haze, the heat-ray shielding capability is worsened. If the BET specific surface area is less than 20 m²/g, the ITO particles become too large, and transparency and the haze cannot be made low. If it exceeds 75 m²/g which is the preferable BET method specific area, when the ITO particles are mixed with a predetermined addition amount of the dispersant, dispersion of the ITO particles is insufficient, and the haze is rather easily worsened. The BET specific surface area is measured by using an apparatus (SA-1100) manufactured by SIBATA SCIENTIFIC TECHNOLOGIES, LTD. In the ITO particles, in an Lab color system, by having a blue or dark blue tone with an L value of 50 or less, a<0 and b<0, it is excellent in heat-ray shielding capability. The above-mentioned L value, a and b are measured by using a color meter (SM-T) manufactured by Suga Test Instruments Co., Ltd. The ITO particles are contained in an amount of 1 to 90% by mass, preferably 5 to 60% by mass based on 100% by mass of the heat-ray shielding particle dispersion. If it is less than 1% by mass, the concentration of the ITO particles is too low, and dispersion of the ITO particles does not proceed sufficiently. Also, if it exceeds 90% by mass, the dispersion becomes high viscosity whereby dispersion does not proceed.

The solvent of the heat-ray shielding particle dispersion of the present embodiment contains 60% by mass or more of water, preferably 90 to 100% by mass. Water is pure water such as distilled water, ion exchange water, etc. As the solvent contained other than water, an alcohol having 1 to 3 carbon atoms is preferable. Specifically, as the alcohol, methanol, ethanol, 1-propanol, 2-propanol, etc., may be mentioned. The alcohol of the present embodiment may be used as a single kind alone or in combination of two or more kinds. The solvent is a component obtained by removing the heating residue of the dispersion from the heat-ray shielding particle dispersion, and contained in an amount of 6.1 to 99.0% by mass, preferably 28.0 to 91.0% by mass based on 100% by mass of the dispersion. If the content of the solvent is less than 6.1% by mass, the viscosity of the dispersion is too high and the ITO particles do not disperse. If it exceeds 99.0% by mass, the added amount of the other components than the solvent is reduced, and the effects of containing the other components do not develop. Here, the heating residue refers to a component obtained in accordance with JIS K5601-1-2 (Testing methods for paint components-Part 1: General rule-Section 2: Determination of non-volatile matter content), and in the present embodiment, it is referred to the component in which the ITO particles and the active ingredient(s) of the dispersant are summed. If the content of water is less than 60% by mass, the content of the alcohol is relatively increased, and the dispersion is easily volatilized.

The dispersant of the heat-ray shielding particle dispersion of the present embodiment is a water-soluble aqueous dispersant, and is one kind or two or more kinds of a dispersant(s) selected from the group consisting of a phosphate ester-based dispersant, a polyglycerin-based dispersant, a polyvinylpyrrolidone-based dispersant and a polyacrylate-based dispersant. Such a dispersant can be commercially available and, for example, as the phosphate ester-based dispersant, there may be exemplified by PLYSURF A212C, PLYSURF A208N, PLYSURF A219B, PLYSURF M208F (all manufactured by DSK Co., Ltd.), DISPARLON AQ-330, DISPARLON AQ-320, (all manufactured by Kusumoto Chemicals, Ltd.), SOLSPERSE 41000 (manufactured by The Lubrisol Corporation), DISPERBYK·110, DISPERBYK-111 (all manufactured by BYK-Chemie (BYK) GmbH), PHOSPHANOL RE·610, PHOSPHANOL ML-200, PHOSPHANOL ML-220, PHOSPHANOL BH-650, PHOSPHANOL RA-600, PHOSPHANOL RD-510Y, PHOSPHANOL RD-720N, PHOSPHANOL RS-610, PHOSPHANOL RS-710 (all manufactured by TOHO Chemical Industry Co., LTD.), Light Ester P-1M, Light Ester P-2M (all manufactured by KYOEISHA CHEMICAL Co., Ltd.), ADEKA COL PS-440E, ADEKA COL PS-810E, ADEKA COL TS-230E (all manufactured by ADEKA CORPORATION), ethyl phosphate, diethyl phosphite, diphenyl phosphite, etc. As the polyglycerin-based dispersant, there may be exemplified by SY-Glyster MCA-750, SY-Glyster ML-750, SY-Glyster MM-750 (all manufactured by Sakamoto Yakuhin Kogyo Co., Ltd.), POEM J-0021, J-0381V (all manufactured by RIKEN VITAMIN CO., LTD.), etc. As the polyvinylpyrrolidone (PVP)-based dispersant, there may be exemplified by PITZCOL K-30L, PITZCOL K-50, PITZCOL K-85 (manufactured by DSK Co., Ltd.), polyvinylpyrrolidone K-30W (manufactured by NIPPON SHOKUBAI CO., LTD.), etc. As the polyoxyethylene-polyoxypropylene condensate-based dispersant (just to clarify: such polyoxyethylene-polyoxypropylene condensate-based dispersants are not according to the current invention), there may be exemplified by ADEKA Pluronic L-64, ADEKA Pluronic L-71, ADEKA Pluronic L-101 (all manufactured by ADEKA CORPORATION), etc. As the polyacrylate-based dispersant, there may be exemplified by DISPERBYK-2013, DISPERBYK-2015, DISPERBYK-191, DISPERBYK-194N (manufactured by BYK-Chemie GmbH), etc.

A contained ratio of the dispersant to the ITO particles in the heat-ray shielding particle dispersion of the present embodiment is 0.05 to 80 parts by mass, preferably 1 to 60 parts by mass as the active ingredient(s) of the dispersant when the ITO particles are made 100 parts by mass. Here, the active ingredient(s) of the dispersant means a component(s) contributing to dispersion, and is a component(s) (a solid component after heating the dispersant and curing) equal to the amount removed the ITO particle component from the heated component. If the contained ratio of the active ingredient(s) of the dispersant is less than the lower limit value of 0.05 part by mass, the ITO particles do not disperse uniformly, while if it exceeds the upper limit value of 80 parts by mass, the dispersant becomes high viscosity as compared to the solvent such as water, etc., so that when the added amount of the dispersant is too much, it becomes high viscosity from the initial stage of dispersion and the dispersion does not proceed. In addition, there is inconvenience of causing depletion coaggregation of the ITO particles.

### [Production of heat-ray shielding particle dispersion]

The heat-ray shielding particle dispersion of the present embodiment is produced by mixing the above-mentioned solvent containing 60% by mass or more of water and the above-mentioned dispersant to prepare a dispersant aqueous solution, adding the above-mentioned ITO particles to the dispersant aqueous solution, and stirring the mixture. Stirring is carried out by adding the ITO particles to the dispersant aqueous solution at room temperature. According to this procedure, the ITO particles are uniformly dispersed in the form of primary particles to give a transparent dispersion. As the stirring apparatus, there may be mentioned a beads mill, a paint shaker, a rotating and revolving mixer, etc. By mixing so as to contain 0.3 to 90% by mass of the ITO particles and 6.1 to 99.7% by mass of the solvent based on 100% by mass of the dispersion, respectively, and so as to contain 0.05 to 80 parts by mass of the dispersant as an active ingredient(s) of the dispersant based on 100 parts by mass of the ITO particles, the heat-ray shielding particle dispersion is produced. (it should be noted that some of the such produced dispersions are not according to the current invention, but were produced as comparison; the current invention requires ITO particles in an amount of 1 to 90% by mass with respect to 100% by mass of the dispersion and solvent in an amount of 6.1 to 99.0% by mass with respect to 100% by mass of the dispersion.)

### [Production of coating material for heat-ray shielding]

A coating material for heat-ray shielding can be produced by using the heat-ray shielding particle dispersion of the present embodiment. For example, an aqueous UV curing resin, a polymerization initiator and ion exchange water are mixed and after completely dissolving the polymerization initiator, the dispersion obtained by the present embodiment is mixed with the solution, whereby the coating material for heat-ray shielding can be produced.

### EXAMPLES

Next, Examples of the present invention will be explained in detail with Comparative Examples.

### [Nine kinds of ITO particles]

Nine kinds of ITO particles to be used in Examples 1 to 50 of the present invention and Comparative Examples 1 to 7 are shown in Table 1. In Table 1, ITO particles having a BET specific surface area of 20 to 40 m²/g, an L value in an Lab color system of 40 to 50, a<0 and b<0, and a color tone of which is blue are shown with No. M-1 to No. M-3, and ITO particles having a BET specific surface area of 40 m²/g or more, an L value in an Lab color system of 20 to 30, a<0 and b<0, and a color tone of which is dark blue are shown with No. S-1 to No. S-5. ITO particles having a BET specific surface area which is out of the range of the present invention of less than 20 m²/g, an L value in an Lab color system of 70, a is -3.0 and b is -5.0, and a color tone of which is light blue is shown with No. L.

**[Table 1]**

| Kind | Content of ITO particles | | | | |
|---|---|---|---|---|---|
| | BET value (m²/g) | Color tone | L value | a | b |
| No. L | 18.0 | Light blue | 70.0 | -3.0 | -5.0 |
| No. M-1 | 21.0 | Blue | 49.8 | -4.0 | -10.1 |
| No. M-2 | 30.0 | Blue | 47.3 | -3.6 | -11.9 |
| No. M-3 | 39.0 | Blue | 46.2 | -3.5 | -10.9 |
| No. S-1 | 41.2 | Dark blue | 28.3 | -2.5 | -15.6 |
| No. S-2 | 46.2 | Dark blue | 25.7 | -3.2 | -6.7 |
| No. S-3 | 49.9 | Dark blue | 29.1 | -1.7 | -14.5 |
| No. S-4 | 55.8 | Dark blue | 26.6 | -3.9 | -7.4 |
| No. S-5 | 71.0 | Dark blue | 29.1 | -2.1 | -12.0 |

### [Eleven kinds of dispersants]

Eleven kinds of dispersants to be used in Examples 1 to 50 of the present invention and Comparative Examples 1 to 7 are shown in Table 2. As can be clearly seen from Table 2, as the phosphate ester-based dispersants, No. 1a: DISPARLON AQ-330 (manufactured by Kusumoto Chemicals, Ltd.), No. 1b: SOLSPERSE 41000 (manufactured by The Lubrisol Corporation), No. 1c: PLYSURF A212C (manufactured by DSK Co., Ltd.) and No. 1d: ethyl phosphate (manufactured by TOKYO CHEMICAL INDUSTRY CO., LTD.) were used. As the polyglycerin-based dispersant, No. 2: SY-Glyster MCA-750 (manufactured by Sakamoto Yakuhin Kogyo Co., Ltd.) was used. As the polyvinylpyrrolidone-based dispersant, No. 3: PITZCOL K-30L (manufactured by DSK Co., Ltd.) was used. As the polyoxyethylene-polyoxypropylene condensate-based dispersants (polyoxyethylene-polyoxypropylene condensate-based dispersants are not according to the current invention), No. 4a: ADEKA Pluronic L-64 (manufactured by ADEKA CORPORATION) and No. 4b: ADEKA Pluronic L-101 (manufactured by ADEKA CORPORATION) were used. As the polyacrylate-based dispersant, No. 5: DISPERBYK-2013 (manufactured by BYK-Chemie) was used. For comparison, as the dispersants which were not the dispersant of the present invention, No. 6: LOMAR PWA-40K (manufactured by SAN NOPCO LIMITED) which is a condensed naphthalene sulfonic acid ammonium salt-based dispersant and No. 7: Nuosperse 2006 (manufactured by ELEMENTIS) which is a sulfosuccinic acid sodium salt-based dispersant were used.

**[Table 2]**

| Kind | Content of dispersant | |
|---|---|---|
| No. 1a | Phosphate ester-based dispersant | DISPARLON AQ-330 |
| No. 1b | Phosphate ester-based dispersant | SOLSPERSE 41000 |
| No. 1c | Phosphate ester-based dispersant | PLYSURF A212C |
| No. 1d | Phosphate ester-based dispersant | Ethyl phosphate |
| No. 2 | Polyglycerin-based dispersant | SY-Glyster MCA-750 |
| No. 3 | Polyvinylpyrrolidone-based dispersant | PITZCOL K-30L |
| No. 4a* | Polyoxyethylene-polyoxypropylene condensate-based dispersant | ADEKA Pluronic L-64 |
| No. 4b* | Polyoxyethylene-polyoxypropylene condensate-based dispersant | ADEKA Pluronic L-101 |
| No. 5 | Polyacrylate-based dispersant | DISPERBYK-2013 |
| No. 6 | Condensed naphthalene sulfonic acid ammonium salt-based dispersant | LOMAR PWA-40K |
| No. 7 | Sulfosuccinic acid sodium salt-based dispersant | Nuosperse 2006 |

| | | |
|---|---|---|
| *not according to the current invention | | |

### <Example 1>

As the ITO particles, the ITO particles of No. S-3 was used, and as the dispersant, DISPARLON AQ-330 (manufactured by Kusumoto Chemicals, Ltd.) of No. 1a was used. This dispersant was mixed with ion exchange water of room temperature to prepare a dispersant aqueous solution, and the ITO particles of the above-mentioned No. S-3 was added to the dispersant aqueous solution and dispersed by a beads mill which is a stirring apparatus to obtain a heat-ray shielding particle dispersion. At this time, a contained ratio of the dispersant was 0.05 part by mass when the ITO particles were made 100 parts by mass, a contained ratio of the ITO particles to 100% by mass of the dispersion was 20% by mass, a contained ratio of water in the solvent was 100% by mass, and a contained ratio of the solvent was 79.99% by mass based on 100% by mass of the dispersion. The content of the heat-ray shielding particle dispersion is shown in Table 3.

### <Examples 2 to 50 and Comparative Examples 1 to 7>

Among the ITO particles and the dispersants of the kinds shown in Table 1 and Table 2, as shown in the following Table 3 to Table 5, the ITO particles and the dispersants of Examples 2 to 50 and Comparative Examples 1 to 7 were selected, respectively. Also, by using the same stirring apparatus as used in Example 1, as shown in Table 3 to Table 5, when the ITO particles were made 100 parts by mass, a contained ratio of the dispersant, a contained ratio of the ITO particles based on 100% by mass of the dispersion, a contained ratio of water in the solvent and a contained ratio of the solvent based on 100% by mass of the dispersion were determined. In Example 29, 40% by mass of the solvent was made ethanol, and the remaining 60% by mass was made water. Also, in Example 50, as the dispersant, both of No. 2 and No. 3 were used. A mass ratio of the dispersant of No. 2:the dispersant of No. 3 was 2:1.

**[Table 3]**

| | Heat-ray shielding particle dispersion | | | | | | Evaluation of dispersion | | |
|---|---|---|---|---|---|---|---|---|---|
| | Kind of ITO particles | Kind of dispersant | Dispersant/ ITO particles (parts by mass) | ITO particles/ dispersion (mass%) | Water/ solvent (mass%) | Solvent/ dispersion (mass%) | Haze (%) | Transmittance at wavelength of 1,200 nm (%) | Visible light transmittance (%) |
| Example 1 | No. S-3 | No. 1a | 0.05 | 20 | 100 | 79.99 | 1.0 | 25.4 | 94.02 |
| Example 2 | No. S-3 | No. 1a | 0.5 | 20 | 100 | 79.9 | 0.7 | 26.2 | 94.3 |
| Example 3 | No. S-3 | No. 1a | 1 | 20 | 100 | 79.8 | 0.3 | 30.0 | 95.5 |
| Example 4 | No. S-3 | No. 1a | 5 | 20 | 100 | 79.0 | 0.3 | 29.9 | 95.4 |
| Example 5 | No. S-3 | No. 1a | 15 | 20 | 100 | 77.0 | 0.4 | 27.1 | 95.3 |
| Example 6 | No. S-3 | No. 1a | 30 | 20 | 100 | 74.0 | 0.7 | 25.6 | 94.3 |
| Example 7 | No. S-3 | No. 1a | 80 | 20 | 100 | 64.0 | 2.8 | 25.0 | 93.0 |
| Example 8 | No. S-3 | No. 1a | 10 | 30 | 100 | 67.0 | 0.4 | 27.0 | 95.0 |
| Example 9 | No. S-3 | No. 1a | 20 | 30 | 100 | 64.0 | 0.4 | 27.2 | 95.1 |
| Example 10 | No. S-3 | No. 1a | 30 | 30 | 100 | 61.0 | 0.6 | 26.5 | 94.5 |
| Example 11 | No. S-1 | No. 1a | 30 | 20 | 100 | 74.0 | 1.2 | 25.4 | 93.8 |
| Example 12 | No. S-2 | No. 1a | 30 | 20 | 100 | 74.0 | 0.8 | 25.9 | 93.8 |
| Example 13 | No. S-4 | No. 1a | 30 | 20 | 100 | 74.0 | 0.5 | 26.2 | 94.8 |
| Example 14 | No. S-5 | No. 1a | 30 | 20 | 100 | 74.0 | 1.2 | 25.5 | 93.72 |
| Example 15 | No. S-3 | No. 1b | 0.5 | 30 | 100 | 69.85 | 1.5 | 28.9 | 93.2 |
| Example 16 | No. S-3 | No. 1b | 5 | 30 | 100 | 68.5 | 0.3 | 28.0 | 95.5 |
| Example 17 | No. S-3 | No. 1b | 15 | 30 | 100 | 65.5 | 0.3 | 28.4 | 95.6 |
| Example 18 | No. S-3 | No. 1b | 20 | 30 | 100 | 64.0 | 0.4 | 29.2 | 95.4 |
| Example 19 | No. S-3 | No. 1b | 25 | 30 | 100 | 62.5 | 0.4 | 29.1 | 95.6 |
| Example 20 | No. S-3 | No. 1b | 30 | 30 | 100 | 61.0 | 0.4 | 29.2 | 95.1 |
| Example 21 | No. S-3 | No. 1b | 50 | 30 | 100 | 55.0 | 1.5 | 29.2 | 92.03 |
| Example 22 | No. S-3 | No. 1b | 60 | 30 | 100 | 52.0 | 4.6 | 29.4 | 90.65 |

**[Table 4]**

| | Heat-ray shielding particle dispersion | | | | | | Evaluation of dispersion | | |
|---|---|---|---|---|---|---|---|---|---|
| | Kind of ITO particles | Kind of disper sant | Dispersant/ ITO particles (parts by mass) | ITO particles/ dispersion (mass%) | Water/ solvent (mass%) | Solvent/ dispersion (mass%) | Haze (%) | Transmittance at wavelength of 1,200 nm (%) | Visible light transmittance (%) |
| Example 23 | No. S-3 | No. 1b | 80 | 5 | 100 | 91.0 | 1.3 | 28.8 | 93.5 |
| Example 24 | No. S-3 | No. 1b | 1 | 1 | 100 | 99.0 | 1.5 | 28.6 | 93.4 |
| Example 25 | No. S-3 | No. 1b | 10 | 3 | 100 | 96.7 | 1.6 | 28.4 | 93.6 |
| Example 26 | No. S-3 | No. 1b | 20 | 50 | 100 | 40.0 | 1.1 | 21.1 | 93.1 |
| Example 27 | No. S-3 | No. 1b | 20 | 60 | 100 | 28.0 | 0.9 | 21.6 | 93.6 |
| Example 28 | No. S-3 | No. 1b | 80 | 20 | 100 | 64.0 | 1.7 | 19.3 | 93.6 |
| Example 29 | No. S-3 | No. 1b | 20 | 30 | 60 | 64.0 | 0.5 | 28.7 | 95.6 |
| Example 30 | No. S-3 | No. 1c | 1 | 20 | 100 | 79.8 | 0.5 | 30.0 | 95.2 |
| Example 31 | No. S-3 | No. 1d | 5 | 20 | 100 | 79.0 | 0.6 | 32.5 | 94.5 |
| Example 32 | No. S-3 | No. 2 | 1 | 20 | 100 | 79.8 | 0.6 | 32.1 | 95.2 |
| Example 33 | No. S-3 | No. 3 | 0.5 | 20 | 100 | 79.9 | 0.6 | 32.1 | 95.0 |
| Example 34* | No. S-3 | No. 4a | 5 | 30 | 100 | 68.5 | 0.6 | 28.9 | 95.4 |
| Example 35* | No. S-3 | No. 4b | 5 | 30 | 100 | 68.5 | 1.0 | 25.0 | 94.0 |
| Example 36 | No. S-3 | No. 5 | 10 | 30 | 100 | 67.0 | 0.8 | 27.5 | 94.3 |
| Example 37 | No. M-2 | No. 1a | 0.05 | 20 | 100 | 79.99 | 3.0 | 38.8 | 89.5 |
| Example 38 | No. M-1 | No. 1a | 40 | 20 | 100 | 72.0 | 2.4 | 59.0 | 93.5 |
| Example 39 | No. M-2 | No. 1a | 40 | 20 | 100 | 72.0 | 1.5 | 41.2 | 92.5 |
| Example 40 | No. M-3 | No. 1a | 40 | 20 | 100 | 72.0 | 1.0 | 50.8 | 95.2 |
| Example 41 | No. M-2 | No. 1b | 40 | 20 | 100 | 72.0 | 1.2 | 50.7 | 95.1 |
| Example 42 | No. M-2 | No. 1c | 10 | 20 | 100 | 78.0 | 1.3 | 50.1 | 94.9 |
| Example 43 | No. M-2 | No. 1d | 10 | 20 | 100 | 78.0 | 2.3 | 39.5 | 90.8 |

| | | | | | | | | | |
|---|---|---|---|---|---|---|---|---|---|
| *not according to the current invention | | | | | | | | | |

**[Table 5]**

| | Heat-ray shielding particle dispersion | | | | | | Evaluation of dispersion | | |
|---|---|---|---|---|---|---|---|---|---|
| | Kind of ITO particles | Kind of dispersant | Dispersant/ ITO particles (parts by mass) | ITO particles/ dispersion (mass%) | Water/ solvent (mass%) | Solvent/ dispersion (mass%) | Haze (%) | Transmittance at wavelength of 1,200 nm (%) | Visible light transmittance (%) |
| Example 44 | No. M-2 | No. 2 | 10 | 20 | 100 | 78.0 | 2.1 | 38.2 | 92.8 |
| Example 45 | No. M-2 | No. 3 | 0.5 | 20 | 100 | 79.9 | 2.5 | 50.7 | 95.1 |
| Example 46* | No. M-2 | No. 4a | 50 | 20 | 100 | 70.0 | 3.2 | 38.0 | 94.0 |
| Example 47* | No. M-2 | No. 4a | 80 | 20 | 100 | 64.0 | 4.9 | 35.0 | 85.1 |
| Example 48* | No. M-2 | No. 4b | 50 | 20 | 100 | 70.0 | 3.3 | 36.2 | 93.1 |
| Example 49 | No. M-2 | No. 5 | 10 | 20 | 100 | 78.0 | 1.8 | 39.8 | 95.1 |
| Example 50 | No. S-2 | No. 2 No. 3 | 3 | 20 | 100 | 79.4 | 0.9 | 39.8 | 95.1 |
| Comparative Example 1 | No. L | No. 1a | 1 | 20 | 100 | 79.8 | 11.2 | 61.2 | 82.3 |
| Comparative Example 2 | No. S-2 | No. 6 | 1 | 20 | 100 | 79.8 | cannot be measured | cannot be measured | cannot be measured |
| Comparative Example 3 | No. S-2 | No. 7 | 1 | 20 | 100 | 79.8 | cannot be measured | cannot be measured | cannot be measured |
| Comparative Example 4 | No. S-2 | No. 1a | 0.001 | 30 | 100 | 69.99 | 5.8 | 27.5 | 84.5 |
| Comparative Example 5 | No. S-2 | No. 1a | 90 | 20 | 100 | 62.0 | 6.11 | 28.2 | 83.3 |
| Comparative Example 6 | No. S-2 | No. 1a | 20 | 0.5 | 100 | 99.4 | cannot be measured | cannot be measured | cannot be measured |
| Comparative Example 7 | No. S-2 | No. 1a | 1 | 93 | 100 | 6.07 | cannot be measured | cannot be measured | cannot be measured |

| | | | | | | | | | |
|---|---|---|---|---|---|---|---|---|---|
| *not according to the current invention | | | | | | | | | |

### <Comparative tests and evaluation>

The heat-ray shielding particle dispersions obtained in Examples 1 to 50 and Comparative Examples 1 to 7 were made samples, a haze, a transmittance at a wavelength of 1,200 nm and a visible light transmittance of the respective samples were measured by the following methods. These measurement results are shown in Table 3 to Table 5.

### (1) Haze

The sample was diluted with ion exchange water so that the concentration of the ITO particles in each of the sample became 0.3% by mass, and the diluted dispersion was measured by a haze meter (HZ-2 manufactured by Suga Test Instruments Co., Ltd.) in accordance with JIS standard (JISK7136).

### (2) Transmittance at wavelength of 1,200 nm and visible light transmittance

A dispersion in which the sample was diluted in the same manner as in the sample in which the haze has been measured was placed in a glass cell having an optical path length of 1 mm, a transmittance at a wavelength of 1,200 nm and visible light transmittance were measured by using an integrating sphere type spectrophotometer (UH4150 manufactured by Hitachi High-Technologies Corporation) in accordance with JIS standard (JIS R 3106) .

As clearly seen from Table 5, in Comparative Example 1, the ITO particles of No. L were used, and the BET value was small as 18.0 m²/g and the L value was large as 70.0, so that the haze was high as 11.2% and the visible light transmittance was also low as 82.3%, whereby sufficient transparency could not be obtained.

In Comparative Example 2 and Comparative Example 3, the dispersants of No. 6 and No. 7 which were the dispersants other than the dispersants of the present invention were used, the ITO particles did not disperse uniformly, and evaluation of the dispersion could not be done.

In Comparative Example 4, even when the dispersant of the present invention is used as a dispersant, the dispersant was too little as 0.001 part by mass based on the ITO particles, dispersion of the ITO particles did not proceed sufficiently, the haze was high as 5.8% and the visible light transmittance was low as 84.5%, whereby sufficient transparency could not be obtained.

In Comparative Example 5, even when the dispersant of the present invention was used as a dispersant, if the dispersant was too much as 90 parts by mass to the ITO particles, the dispersion became too high viscosity and dispersion of the ITO particles did not proceed whereby it did not become a good dispersion, the haze was high as 6.11% and the visible light transmittance was low as 83.3%, whereby sufficient transparency could not be obtained.

In Comparative Example 6, the ITO particles were too little as 0.5% by mass to the dispersion, and the ITO particles did not sufficiently disperse, whereby evaluation of the dispersion could not be done.

In Comparative Example 7, the ITO particles were too much as 93% by mass with respect to the dispersion, and the solvent was too little as 6.07% by mass so that it became high viscosity, whereby evaluation of the dispersion could not be done.

To the contrary, as clearly seen from Table 3 through Table 5, in Examples 1 to 50, dispersion is done by using the ITO particles, the solvent and the dispersant which satisfy the requirements defined in the first aspect and the third aspect, so that heat-ray shielding particle dispersions having high transparency and heat-ray shielding capability can be prepared. At this time, when the ITO particles are used with the kinds of No. S-1 to No. S-5, more excellent heat-ray shielding capability can be given.

### UTILIZABILITY IN INDUSTRY

The heat-ray shielding particle dispersion of the present invention can be utilized for a coating material for heat-ray shielding to be coated onto a transparent portion of automobiles, building materials, etc.

## Claims

1. A heat-ray shielding particle dispersion which contains indium tin oxide (ITO) particles having a heat-ray shielding capability, a solvent containing 60% by mass or more of water and a dispersant,
the ITO particles have a BET specific surface area of 20 m²/g or more and 75 m²/g or less, have a blue or dark blue tone represented by an L value of 50 or less, a<0 and b<0 in an Lab color system, and are contained in an amount of 1-90% by mass with respect to 100% by mass of the dispersion,
the solvent is a component obtained by removing the heating residue from the heat-ray shielding particle dispersion, and is contained in an amount of 6.1-99.0% by mass with respect to 100% by mass of the dispersion,
the dispersant is one kind or two or more kinds of dispersants selected from the group consisting of a phosphate ester-based dispersant, a polyglycerin-based dispersant, a polyvinylpyrrolidone-based dispersant, and a polyacrylate-based dispersant,
wherein the dispersant is a water-soluble dispersant and
a content of an active ingredient(s) of the dispersant is 0.05-80 parts by mass with respect to 100 parts by mass of the ITO particles.

2. The heat-ray shielding particle dispersion according to Claim 1, wherein, when a heat-ray shielding particle dispersion having an ITO particle concentration of 0.3% by mass is placed in a glass cell having an optical path length of 1 mm and measured, a haze is 5% or less, a transmittance at a wavelength of 1,200 nm is 60% or less and a visible light transmittance is 85% or more.

3. A method for producing a heat-ray shielding particle dispersion by mixing ITO particles having a heat-ray shielding capability, a solvent containing 60% by mass or more of water and a dispersant,
wherein the ITO particles have a BET specific surface area of 20 m²/g or more and 75 m²/g or less, have a blue or dark blue tone represented by an L value of 50 or less, a<0 and b<0 in an Lab color system,
the solvent is a component obtained by removing the heating residue of the dispersion from the heat-ray shielding particle dispersion,
the dispersant is one kind or two or more kinds of dispersants selected from the group consisting of a phosphate ester-based dispersant, a polyglycerin-based dispersant, a polyvinylpyrrolidone-based dispersant, and a polyacrylate-based dispersant, wherein the dispersant is a water-soluble dispersant and
these are mixed so as to contain 1 to 90% by mass of the ITO particles and 6.1 to 99.0% by mass of the solvent with respect to 100% by mass of the dispersion, respectively, and 0.05 to 80 parts by mass of an active ingredient(s) of the dispersant with respect to 100 parts by mass of the ITO particles.

4. A method for producing a coating material for heat-ray shielding using the heat-ray shielding particle dispersion according to Claim 1 or 2, or the heat-ray shielding particle dispersion produced by the method according to Claim 3.

## Patentansprüche

1. Hitzestrahlen abschirmende Teilchendispersion, die Indiumzinnoxid (ITO)-Teilchen mit einer Hitzestrahlen abschirmenden Fähigkeit, ein Lösungsmittel, das 60 Masse-% oder mehr Wasser und ein Dispergiermittel enthält,
wobei die ITO-Teilchen eine spezifische BET-Oberfläche von 20 m²/g oder mehr und 75 m²/g oder weniger haben, einen blauen oder dunkelblauen Farbton aufweisen, der durch einen L-Wert von 50 oder weniger, a<0 und b<0 in einem Lab-Farbsystem dargestellt wird, und in einer Menge von 1-90 Masse-% in Bezug auf 100 Masse-% der Dispersion enthalten sind,
das Lösungsmittel eine Komponente ist, die durch Entfernen des Erhitzungsrückstandes aus der Hitzestrahlung abschirmenden Partikeldispersion erhalten wird, und in einer Menge von 6,1-99,0 Mass-%, bezogen auf 100 Masse-% der Dispersion, enthalten ist,
das Dispergiermittel eine Art oder zwei oder mehr Arten von Dispergiermitteln ist, ausgewählt aus der Gruppe bestehend aus einem Dispergiermittel auf Phosphatesterbasis, einem Dispergiermittel auf Polyglycerinbasis, einem Dispergiermittel auf Polyvinylpyrrolidonbasis und einem Dispergiermittel auf Polyacrylatbasis,
wobei das Dispergiermittel ein wasserlösliches Dispergiermittel ist und
der Gehalt an einem oder mehreren Wirkstoffen des Dispergiermittels 0,05-80 Masseteile, bezogen auf 100 Masseteile der ITO-Teilchen, beträgt.

2. Hitzestrahlen abschirmende Teilchendispersion nach Anspruch 1, wobei, wenn eine Hitzestrahlen abschirmende Teilchendispersion mit einer ITO-Teilchenkonzentration von 0,3 Masse-% in eine Glasküvette mit einer optischen Weglänge von 1 mm eingebracht und gemessen wird, die Trübung 5 % oder weniger, die Durchlässigkeit bei einer Wellenlänge von 1200 nm 60 % oder weniger und die Durchlässigkeit für sichtbares Licht 85 % oder mehr beträgt.

3. Verfahren zur Herstellung einer Hitzestrahlen abschirmenden Teilchendispersion durch Mischen von ITO-Teilchen mit einer Hitzestrahlen abschirmenden Fähigkeit, eines Lösungsmittels, das 60 Masse-% oder mehr Wasser enthält, und eines Dispersionsmittels,
wobei die ITO-Teilchen eine spezifische BET-Oberfläche von 20 m²/g oder mehr und 75 m²/g oder weniger aufweisen, einen blauen oder dunkelblauen Farbton haben, der durch einen L-Wert von 50 oder weniger, a<0 und b<0 in einem Lab-Farbsystem dargestellt wird,
das Lösungsmittel eine Komponente ist, die durch Entfernen des Erhitzungsrückstandes der Dispersion aus der Hitzestrahlung abschirmenden Partikeldispersion gewonnen wird,
das Dispergiermittel eine Art oder zwei oder mehr Arten von Dispergiermitteln ist, ausgewählt aus der Gruppe bestehend aus einem Dispergiermittel auf Phosphatesterbasis, einem Dispergiermittel auf Polyglycerinbasis, einem Dispergiermittel auf Polyvinylpyrrolidonbasis und einem Dispergiermittel auf Polyacrylatbasis, wobei das Dispergiermittel ein wasserlösliches Dispergiermittel ist, und
diese so gemischt werden, dass sie 1 bis 90 Masse-% der ITO-Teilchen und 6,1 bis 99,0 Masse-% des Lösungsmittels, jeweils bezogen auf 100 Masse-% der Dispersion, und 0,05 bis 80 Masseteile eines oder mehrerer Wirkstoffe des Dispersionsmittels, bezogen auf 100 Masseteile der ITO-Teilchen, enthalten.

4. Verfahren zur Herstellung eines Beschichtungsmaterials zur Abschirmung von Hitzestrahlen unter Verwendung der Hitzestrahlen abschirmenden Partikeldispersion nach Anspruch 1 oder 2 oder der nach dem Verfahren nach Anspruch 3 hergestellten Hitzestrahlen abschirmenden Partikeldispersion.

## Revendications

1. Dispersion de particules de protection contre les rayons thermiques contenant des particules d'oxyde d'indium et d'étain (ITO) ayant une capacité de protection contre les rayons thermiques, un solvant contenant 60 % en masse ou plus d'eau et un dispersant,
les particules d'ITO ayant une surface spécifique BET de 20 m²/g ou plus et de 75 m²/g ou moins, ayant un ton bleu ou bleu foncé représenté par une valeur L de 50 ou moins, a<0 et b<0 dans un système de couleurs Lab, et étant contenues dans une quantité de 1-90% en masse par rapport à 100% en masse de la dispersion,
le solvant étant un composant obtenu en éliminant le résidu de chauffage de la dispersion de particules de protection contre les rayons thermiques, et étant contenu dans une quantité de 6,1 à 99,0 % en masse par rapport à 100 % en masse de la dispersion,
le dispersant étant un type ou deux types ou plus de dispersants choisis dans le groupe constitué d'un dispersant à base d'ester de phosphate, d'un dispersant à base de polyglycérine, d'un dispersant à base de polyvinylpyrrolidone et d'un dispersant à base de polyacrylate,
dans lequel le dispersant est un dispersant soluble dans l'eau et
la teneur en principe actif(s) du dispersant est de 0,05 à 80 parties en masse par rapport à 100 parties en masse de particules d'ITO.

2. Dispersion de particules de protection contre les rayons thermiques selon la revendication 1, dans laquelle, lorsqu'une dispersion de particules de protection contre les rayons thermiques ayant une concentration de particules d'ITO de 0,3 % en masse est placée dans une cellule de verre ayant une longueur de trajet optique de 1 mm et mesurée, le voile est de 5 % ou moins, la transmittance à une longueur d'onde de 1200 nm est de 60 % ou moins et la transmittance de la lumière visible est de 85 % ou plus.

3. Méthode de production d'une dispersion de particules de protection contre les rayons thermiques par mélange de particules d'ITO ayant une capacité de protection contre les rayons thermiques, d'un solvant contenant 60 % en masse ou plus d'eau et d'un dispersant,
dans lequel les particules d'ITO ont une surface spécifique BET de 20 m²/g ou plus et de 75 m²/g ou moins, ont un ton bleu ou bleu foncé représenté par une valeur L de 50 ou moins, a<0 et b<0 dans un système de couleurs Lab,
le solvant est un composant obtenu en éliminant le résidu de chauffage de la dispersion de particules de protection contre les rayons thermiques,
le dispersant est un type ou deux types ou plus de dispersants choisis dans le groupe constitué d'un dispersant à base d'ester de phosphate, d'un dispersant à base de polyglycérine, d'un dispersant à base de polyvinylpyrrolidone et d'un dispersant à base de polyacrylate, dans lequel le dispersant est un dispersant soluble dans l'eau et
ils sont mélangés de manière à contenir de 1 à 90% en masse de particules d'ITO et de 6,1 à 99,0% en masse de solvant par rapport à 100% en masse de la dispersion, respectivement, et de 0,05 à 80 parties en masse d'un ou de plusieurs ingrédients actifs du dispersant par rapport à 100 parties en masse de particules d'ITO.

4. Procédé de fabrication d'un matériau de revêtement pour la protection contre les rayons thermiques utilisant la dispersion de particules de protection contre les rayons thermiques selon la revendication 1 ou 2, ou la dispersion de particules de protection contre les rayons thermiques produite par le procédé selon la revendication 3.
